Europäisches Patentamt

European Patent Office

Office européen des brevets

(19)

(11) Veröffentlichungsnummer: **0 120 136**
A1

(12) ## EUROPÄISCHE PATENTANMELDUNG

(21) Anmeldenummer: 83112945.7

(22) Anmeldetag: 22.12.83

(51) Int. Cl.³: **G 01 B 7/30**

(30) Priorität: 26.01.83 DE 3302458

(43) Veröffentlichungstag der Anmeldung:
03.10.84 Patentblatt 84/40

(84) Benannte Vertragsstaaten:
BE IT NL SE

(71) Anmelder: Licentia Patent-Verwaltungs-GmbH
Theodor-Stern-Kai 1
D-6000 Frankfurt/Main 70(DE)

(72) Erfinder: Woicke, Günter, Ing.Grad.
Raboisenstrasse 14A
D-2200 Elmshorn(DE)

(74) Vertreter: Lertes, Kurt, Dr. et al,
Licentia Patent-Verwaltungs-GmbH Theodor-Stern-Kai 1
D-6000 Frankfurt/M 70(DE)

(54) Verfahren zur indirekten Messung von Winkeln.

(57) Die Erfindung betrifft ein Verfahren zur indirekten Messung von Winkeln zur Unterdrückung von Lastpendelungen. Da eine Messung mit mechanischen Geräten wegen des großen Verschleißes unzweckmäßig ist, wird aus der an einer festen Umlenkrolle (1) gemessenen Seilkraft (F¹) mit definierter Kraftrichtung eine Sollkraft (Fsoll) ermittelt, ferner an einer das Lastseil aufnehmenden Umlenkrolle (2) die Ist-Seildraft (F²) gemessen, und aus dem Verhältnis von Ist-Seilkraft und Sollkraft der Pendelwinkel (ρ) abgeleitet.

FIG.3a

Croydon Printing Company Ltd.

0120136

Licentia Patent-Verwaltungs-GmbH          PTL-HH/Sa/ge
Theodor-Stern-Kai 1                        HH 81/39

D-6000 Frankfurt 70


"Verfahren zur indirekten Messung von Winkeln"

Die Erfindung betrifft ein Verfahren gemäß den Merkmalen des Hauptanspruches.


Der Betrieb von Kranen und anderen Umschlageinrichtungen wird im zunehmenden Maße automatisiert, um die Liegezeiten von Schiffen zu verkürzen und das Bedienungspersonal der Umschlaggeräte von monotonen Arbeitsvorgängen zu entlasten. Damit sind aber für den Lade- und Entladebetrieb hohe Endgeschwindigkeiten und damit Geschwindigkeits-Änderungen des Greifers oder Lasthakens verbunden, die Pedelungen der Last hervorrufen. Voraussetzung für eine Automatisierung ist es, die Pendelwinkel zu erfassen und daraus Gegenmaßnahmen abzuleiten, um zumindest in den Lastaufnahme- und Lastabsetzpunkten eine nahezu pendelfreie Greifer- oder Lasthakenführung zu gewährleisten.


Die Erfassung des Pendelwinkels kann sowohl direkt mit mechanischen Mitteln als auch durch Messung der Ankerströme der Gleichstrom-Antriebsmotoren erfolgen. Der Einsatz von mechanischen Geräten führt infolge der hohen Beanspruchungen im rauhen Ladebetrieb nur zu verhältnismäßig kurzer Lebensdauer, abgesehen von komplizierten Nachführungen des Meßsystems bei einigen Hebezeugausführungen, (z.B. Doppellenker-Konstruktion).


- 2 -

Die Auswertung elektrischer Daten der Gleichstrom-Motore ist nur auf Antriebe von Laufkatzen bei Entladeeinrichtungen beschränkt, bei denen die Masse der Katze gegenüber der Last klein ist, sodaß Lastpendelungen genügend große Rückwirkungen auf den Antrieb hervorrufen. Hinzu kommt, daß hiermit Anfangspendelungen, Windeinflüsse und ähnliche Faktoren nicht erfaßt und ausgewertet werden können.

Als Stand der Technik wird beispielsweise auf den Aufsatz von Klaus Schwardt- mann "Pendeldämpfung bei Entladeanlagen für Schüttgut", Zeitschrift "Fördern und Heben" 26 (1976) Nr. 2 hingewiesen.

Aus der in diesem Aufsatz erwähnten DE-PS 12 78 079 ist eine Anordnung bekannt, die zur Unterdrückung von Pendelungen dient, bei der der Pendelwinkel bei Katzantrieb im Greiferbetrieb durch eine Rechenschaltung mittelbar aus anderen Meßwerten gemäß einer im gegebenen System gültigen Bewegungsgleichung gewonnen wird. Die Rechenschaltung ermittelt aus der in Richtung der Lastaufhängung wirkenden Kraft, der Masse und der Beschleunigung der Laufkatze die in Bewegungsrichtung der Katze angreifende Kraft und danach den Pendelwinkel. Dieser Wert wird dann dem Drehzahlregler des Antriebsmotors vorgegeben und in dem dort angegebenen Regelkreis zur Unterdrückung von Pendelungen ausgewertet. Diese Anordnung ist nicht ohne weiteres auf andere Konstruktionen von Hebezeugen zu übertragen, weil die zur Berechnung des Pendelwinkels notwendigen Größen, wie beispielsweise die Beschleunigung einer Katze, nicht immer zur Verfügung stehen.

Ein ähnliches Problem ist bei Offshoregeräten festzustellen, die über einer definierten Position, z.B. einem Bohrloch, mit Ankern und Ankerseilen positioniert sind. Bei richtiger Positionierung des Gerätes bilden die Ankerseile in Bezug auf die Vertikale vorbestimmte Winkel. Mit einer Veränderung der Offshoreeinheit verändern sich auch die Winkel der Ankerseile mit der Vertikalen, sodaß über die Windenantriebe das Offshoregerät in die vorbestimmte Position zurückgebracht werden muß. Auch hier ist es üblich, den Seilwinkel mit mechanisch arbeitenden oder induktiven Meßwertgebern zu erfassen.

Der Erfindung liegt die Aufgabe zugrunde, ein Verfahren zu schaffen, das aus einfach zu gewinnenden Daten des Hebezeuges die Ermittlung des Pendelwinkels, des Seilauslaufwinkels und ähnliches gestattet.

Diese Aufgabe wird erfindungsgemäß durch die im Kennzeichen des Hauptanspruchs angegebenen Merkmale gelöst. Ein wesentlicher Vorteil des Verfahrens nach der Erfindung besteht darin, daß aus der Messung zweier Größen auf den Betrag und die Richtung des jeweiligen Winkels geschlossen und damit der Antrieb beaufschlagt werden kann, um eine Abweichung von einer vorgegebenen Lage praktisch zu unterbinden.

Weiterbildungen der Erfindung sind in den Unteransprüchen gekennzeichnet.

In der Zeichnung ist ein Ausführungsbeispiel nach der Erfindung dargestellt. Es zeigen

Figur 1 die Kräfte und Winkel für einen Greiferkran,

Figur 2 die Seilwinkel-Erfassung für ein Offshoregerät,

Figur 3 eine graphische Darstellung zur Ermittlung der Sollkräfte und

Figur 4 ein Blockschaltbild zur Berechnung des Pendelwinkels am Beispiel eines Greiferkranes.

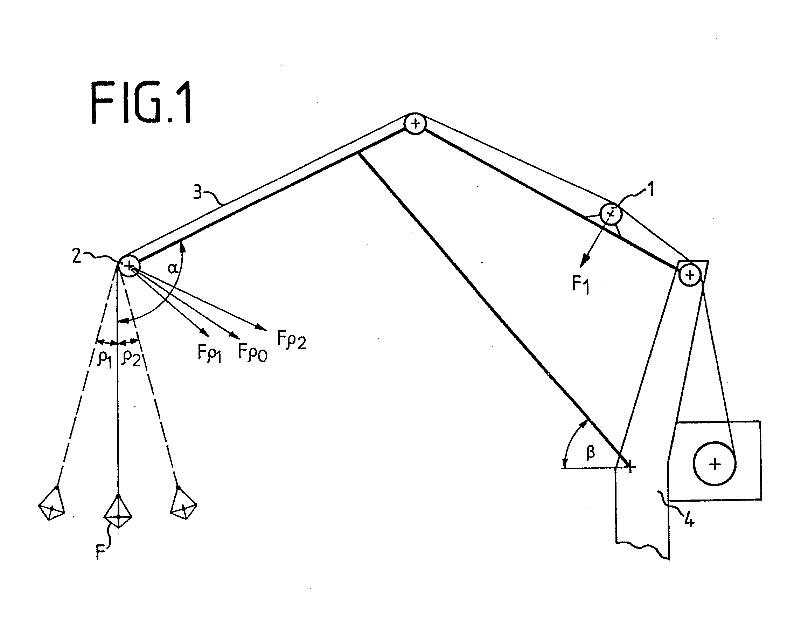

In der schematischen Darstellung nach Figur 1 stellt die festangeordnete Rolle 1 eine reine Meßeinrichtung dar, die an einer geeigneten Stelle im Zuge der Seilführung an einem Kran angebracht ist. Da sie in jeder Kranstellung ohne Einfluß auf das Meßergebnis ist, also gewichtslos angeordnet ist, kann an ihr eine definierte Kraft $F_1$ gemessen werden. Die Kraft wird von einer Last F über des Seil 3 ausgeübt, das über eine weitere Seilrolle 2 geführt ist. Das Seil 3 umfaßt die Rolle 2 je nach der Kranstellung mit einem veränderten Umschlingungswinkel $\alpha$ . Der Winkel $\alpha$ ändert sich zusätzlich durch Pendelungen der Last F, die gestrichelt eingezeichnet sind und mit der Vertikalen die Winkel $\varrho_1$ und $\varrho_2$ einschließen.

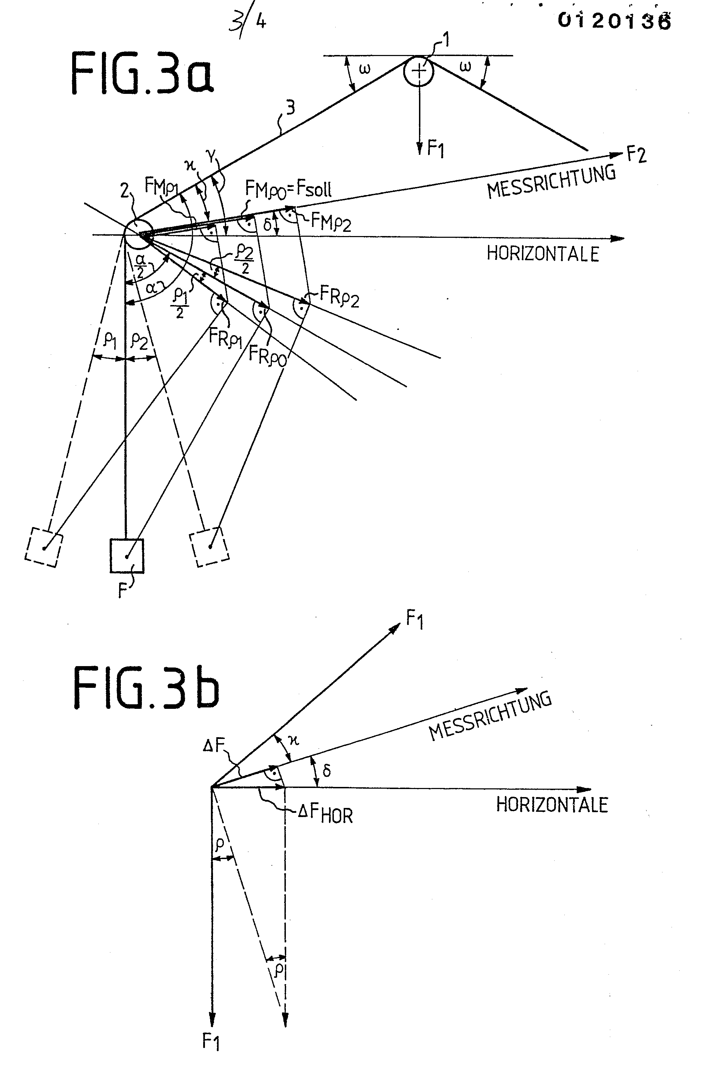

Es wird weiterhin eine Meßrichtung festgelegt, die mit dem Seil 3 einen Einbaulagewinkel $\varkappa$ bildet. Wird die Meßrichtung entsprechend Figur 3a so gewählt, daß sie mit der senkrecht hängenden Last F einen Rechten Winkel bildet und wenn gleichzeitig die Richtung des Seilzuges 3 in eben dieser liegt, d.h. $\varkappa = 0^o$ und $\alpha = 90^o$, so sind die sich ergebenden Zugkraftänderungen am größten. Ändern sich die Zugkräfte infolge der Pendelungen an der Meßstelle $F_1$ mit dem cos des Winkels $\varrho$, erfolgt in der Horizontalen einer Änderung mit dem sin, was bei kleinen Winkeln, wie sie hier vorliegen, eine Verstärkung um den Faktor $\sim 10$ bedeutet.

Die Einbaulage $\alpha$ des Meßgliedes für $F_2$ an der Umlenkrolle 2 beziiglich des Lastseiles 3 muß aber so gewählt werden, daß sich, infolge der Änderung des Wippwinkels $\beta$ und sich damit änderndem Umschlingungswinkel $\alpha$, in den Extremstellungen des Auslegers, d.h. in der maximalen und minimalen Auslage, gleichermaßen auswertbare Meßwertdifferenzen ergeben. Daraus folgt, daß $\varkappa \neq 0^o$ wird, und sich zwei weitere Winkel ergeben wie $\gamma$ als Winkel zwischen Seil 3 und der Horizontalen und $\delta$ als Differenzwinkel zwischen $\gamma$ und $\varkappa$.

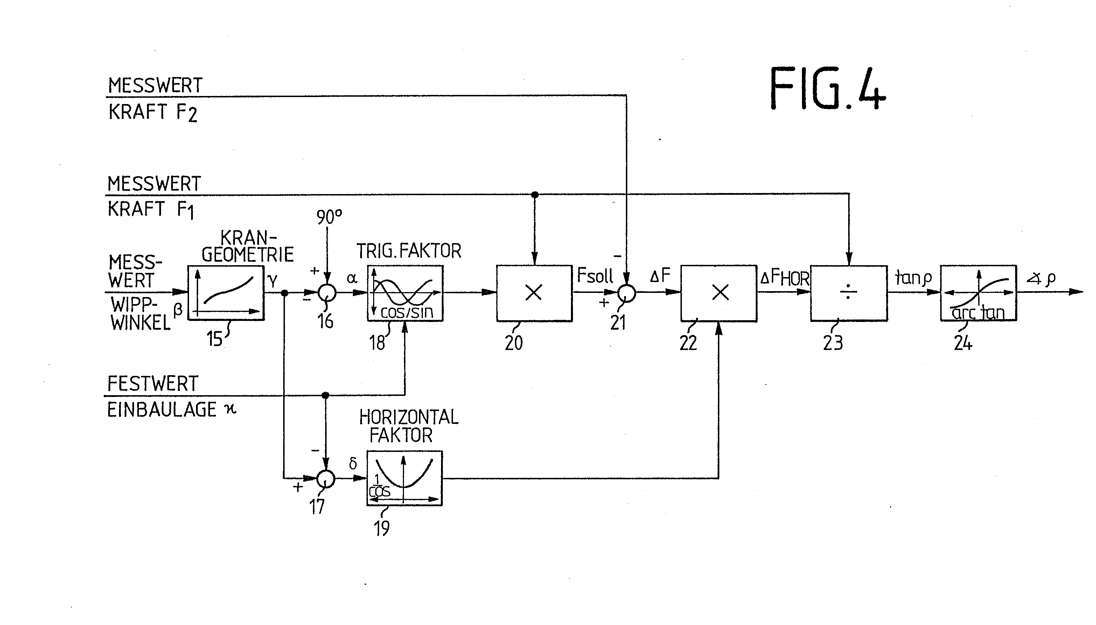

Die Schaltung nach Figur 4 liefert bei Eingabe der gemessenen bzw. bekannten Größen den gesuchten Winkel als Pendelwinkel bei Hebezeugen oder die Auslaufwinkel für verankerte Wasserfahrzeuge, der den entsprechenden Antriebsregelungen als Regel- oder Rechengröße vorgegeben wird.

Anhand der Schaltung Fig. 4 wird der Rechnungsgang dargestellt.

Eingangsgröße für den Block 15 ist der gemessene Wippwinkel $\beta$ des Auslegers gegen die Horizontale. In Block 15 wird die Funktion $\gamma = f(\beta)$ nachgebildet, beispielsweise durch Annäherung mehrerer Geradenzüge. Als Ausgangsgröße steht der Winkel $\gamma$ zur Verfügung. An den Summenpunkten 16 wird der Umschlingungswinkel $\alpha$ sowie an 17 der Differenzwinkel $\delta$ gebildet.

Eingangsgrößen für den Block 18 sind der Umschlingungswinkel $\alpha$ sowie der Einbaulagewinkel $\varkappa$, aus denen ein trigenometrischer Faktor gebildet wird, der, mit der Zugkraft $F_1$ in Block 20 multipliziert, zur Ermittlung der Sollkraft $F_{soll}$, bezogen auf die Einbaulage, herangezogen wird:

$$F_{soll} = F_1 \cdot \frac{\sin\alpha \cdot \cos(\alpha/2 - \varkappa)}{\sin\alpha/2}$$

Die Vergleichsstelle 21 bildet die Differenz $\Delta F$ aus der Sollkraft $F_{soll}$ und der gemessenen Istkraft $F_2$. Dieser Differenzwert kann sowohl positiv als auch negativ werden.

Wird dieser Differenzwert $\Delta F$ mit dem Horizontalfaktor, gebildet aus $\delta$ im Block 19, in Block 22 multipliziert, so erhält man die aus der Lastpendelung herrührende, in Figur 3b dargestellte Horizontalkomponente $\Delta F_{HOR}$:

$$\Delta F_{HOR} = \frac{\Delta F}{\cos}$$

Nach Figur 3b ist der Tangens des Pendelwinkels $\varrho$ das Verhältnis von Horizontalkomponente $F_{HOR}$ zur gemessenen Last $F_1$, Block 23 ; woraus über Block 24 sich der Winkel $\varrho$ in Größe und Richtung ergibt zu

$$\varrho = \operatorname{arctg}\left\{ \frac{F_2 - F_1 \cdot \dfrac{\sin\alpha \cdot \cos(\alpha/2 - \varkappa)}{\sin\alpha/2}}{F_1 \cdot \cos\delta} \right\}$$

Nach dem eben beschriebenen Verfahren können auch die Winkel ermittelt werden, die bei verankerten Fahrzeugen wie Offshoregeräten die Ankerseile mit der Lotrechten einnehmen. Aus der Abweichung dieser Winkel von einem vorgegebenen Wert kann auf eine Positionsänderung des Fahrzeugs geschlossen werden. Ebenso kann, bei bekannter Meerestiefe, über den nach dem Verfahren ermittelten Seilauslaufwinkels die Position des Ankers bezogen zum Gerät bestimmt werden. Diese Kenntnis ist bei sich an Ankerseilen auf einer vorgegebenen Trasse fortbewegenden Einheiten, wie Rohrverleger, wichtig, um die zur Einleitung des Vertriebes notwendigen Seilkräfte vorauszubestimmen.

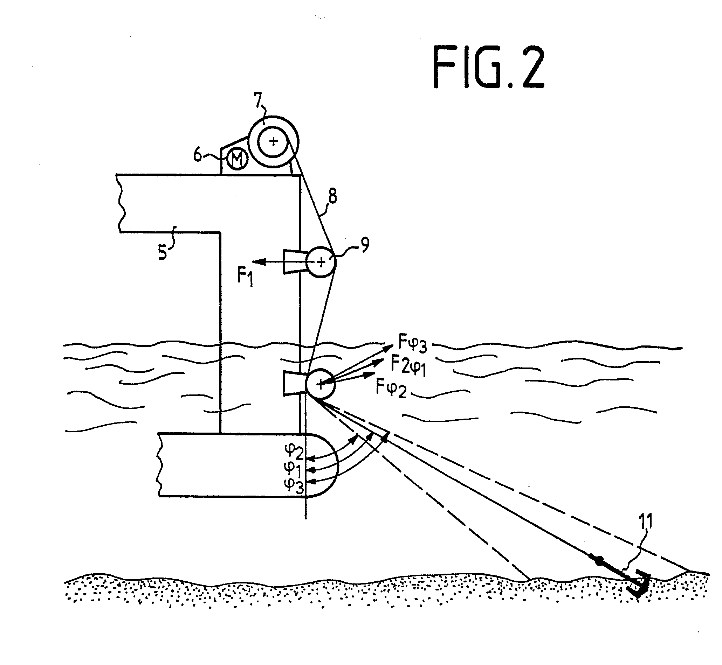

Aus Figur 2 ist ein Fahrzeug 5 mit einer von einem Motor 6 angetriebenen Ankerwinde 7 zu ersehen, von welcher ein Ankerseil 8 über eine Meßrolle 9 und eine Umlenkrolle 10 zu einem auf dem Meeresboden liegenden Anker 11 verläuft. Das Fahrzeug weist eine Mehrzahl solcher Verankerungs-systeme auf. Die Sollposition des Fahrzeugs ist dann erreicht, wenn die Ankerseile in der ausgezogen gezeichneten Richtung zum Anker verlaufen, d.h. der Soll-Auslaufwinkel eingehalten wird. Ist dagegen das Fahrzeug außerhalb der Sollposition, ändern sich der Auslaufwinkel und die Seilrichtung zum Anker (gestrichelte Linien in Figur 2). Der Betrag und die Richtung des Auslaufwinkels, der zwischen der Sollrichtung und der momentan eingenommenen Richtung des Ankerseiles besteht, lassen sich nach den obigen Gleichungen ermitteln und die Windenantriebe können entsprechend betätigt werden.

Bezugszeichenliste

| | |
|---|---|
| 1,9 | Feste Meßrolle zur Ermittlung der Seilkraft |
| 2,10 | Seilrolle, an der der Pendel-Seilabgangswinkel bestimmt wird |
| 3,8 | Lastseil |
| 4 | Kransäule mit Seiltrommel |
| 5 | Ausschnitt halbtauchende Einheit |
| 6 | Antriebsmotor für Ankerwinde |
| 7 | Ankerwinde |
| 11 | Anker |
| F | Last |
| $F_1$ | Seilkraft |
| $F_2$ | Gemessene Kraft in Einbaurichtung |
| Fsoll | Sollkraft in Einbaurichtung |
| Index M | Meßrichtung |
| Index R | Resultierende Kraftrichtung |
| $\alpha$ | Umschlingungswinkel |
| $\beta$ | Wippwinkel Hauptausleger |
| $\gamma$ | Differenzwinkel |
| $\delta$ | Horizontalwinkel |
| $\omega$ | Seilauf - ablaufwinkel Meßrolle |
| $\varphi$ | Seilablaufwinkel Ankerseil |
| $\varkappa$ | Einbaulagewinkel |
| $\varsigma$ | Pendelwinkel |

Licentia Patent-Verwaltungs-GmbH         PTL-HH/Sa/ge
Theodor-Stern-Kai 1                      HH 81/39

D-6000 Frankfurt 70


# PATENTANSPRÜCHE

1. Verfahren zur indirekten Messung von Winkeln an Hebezeugen zur Unterdrückung von Lastpendelungen, insbesondere für Schiffsentlader, dadurch gekennzeichnet, daß aus der gemessenen Seilkraft ($F_1$) an einer festen Umlenkrolle mit definierter Kraftrichtung eine Sollkraft ($F_{soll}$) ermittelt wird, daß ferner an der das Lastseil aufnehmenden Umlenkrolle eine Ist-Seilkraft ($F_2$) gemessen wird, und daß aus dem Verhältnis der Ist-Seilkraft und der Sollkraft der Pendelwinkel ($\varrho$) abgeleitet wird.

2. Verfahren nach Anspruch 1, dadurch gekennzeichnet, daß zur Berechnung der Sollkraft ($F_{soll}$) der aus der Auslage und der Geometrie des Hebezeuges bekannte Umschlingungswinkel ($\alpha$) und der Winkel ($\varkappa$) der Einbaulage (Meßrichtung) nach der Gleichung $F_{soll} = F_1 \times \dfrac{\sin\alpha \times \cos(\alpha/2 - \varkappa)}{\sin\alpha/2}$ herangezogen wird.

3. Verfahren nach Anspruch 1, dadurch gekennzeichnet, daß aus der Differenz der gemessenen Ist-Seilkraft ($F_2$) und der Sollkraft ($F_{soll}$) die Pendelrichtung, bei festgelegter Zählweise, und der Betrag des Winkels entnommen wird.

4. Verfahren nach Anspruch 1, dadurch gekennzeichnet, daß durch Wahl des Winkels ($\alpha$) der Einbaulage (Meßrichtung) und durch Projektion der aus den Seilkräften ($F_1$, $F_2$) resultierenden Größen auf die Meßebene gegenüber der Messung in den Zug-Ebenen vergrößerte Änderungen der Kräfte zur Auswertung erhalten werden.

5. Verfahren nach Anspruch 1, dadurch gekennzeichnet, daß es zur Positionierung von Offshoregeräten, Baggern u.ä. durch Ermittlung der Lage der Anker auf dem Grund verwendet wird.

FIG.1

# FIG.2

# FIG.3a

# FIG.3b

# FIG.4

MESSWERT
―――――――――
KRAFT F$_2$

MESSWERT
―――――――――
KRAFT F$_1$

MESS-
WERT
―――――――
WIPP-
WINKEL $\beta$

KRAN-
GEOMETRIE

$90°$

TRIG.FAKTOR

$\gamma$ $\alpha$

cos/sin

15 16 18

$\times$

20

Fsoll

$-$

21

$\Delta F$

$+$

$\times$

22

$\Delta$F$_{HOR}$

$\div$

23

tan$\rho$

arc tan

24

$\sphericalangle\rho$

FESTWERT
―――――――――
EINBAULAGE $\varkappa$

HORIZONTAL
FAKTOR

$\delta$

$1\over\cos$

17 19

4/4

0120136

**Europäisches Patentamt**

# EUROPÄISCHER RECHERCHENBERICHT

## EINSCHLÄGIGE DOKUMENTE

EP 83112945.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | <u>GB - A - 1 590 300</u> (SANTA FE) <br> * Gesamt * <br> -- | 1-3 | G 01 B 7/30 |
| Y | <u>DE - B - 1 139 257</u> (REICH) <br> * Gesamt * <br> -- | 1-3 | |
| Y | <u>GB - A - 1 474 751</u> (FERRANTI) <br> * Gesamt * <br> -- | 1-3 | |
| Y | <u>DE - B - 1 228 770</u> (PESCHKE) <br> * Gesamt * <br> -- | 1-3 | |
| A | <u>DE - A - 1 950 885</u> (DEMAG) <br> * Gesamt * <br> -- | 1-3 | |
| A | <u>FR - A1 - 2 401 407</u> (PREUX) <br> * Gesamt * <br> -- | 1-3 | RECHERCHIERTE SACHGEBIETE (Int. Cl. ³) <br><br> G 01 B <br> B 66 C <br> G 01 G |
| D <br> A | "FÖRDERN UND HEBEN", 26 (1976), No. 2, Seiten 120-122 <br> -- | | |
| D <br> A | <u>DE - B - 1 278 079</u> (LICENTIA) <br> * Gesamt * <br> ---- | | |

Der vorliegende Recherchenbericht wurde für alle Patentansprüche erstellt.

| Recherchenort | Abschlußdatum der Recherche | Prüfer |
|---|---|---|
| WIEN | 04-07-1984 | TOMASELLI |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPA Form 1503. 03 82